(19) Europäisches Patentamt
European Patent Office
Office européen des brevets

(11) **EP 2 375 754 A1**

(12) **EUROPEAN PATENT APPLICATION**

(43) Date of publication:
**12.10.2011 Bulletin 2011/41**

(51) Int Cl.:
*H04N 7/50* (2006.01)     *H04N 7/26* (2006.01)

(21) Application number: **10159475.2**

(22) Date of filing: **09.04.2010**

| | |
|---|---|
| (84) Designated Contracting States:<br>AT BE BG CH CY CZ DE DK EE ES FI FR GB GR HR HU IE IS IT LI LT LU LV MC MK MT NL NO PL PT RO SE SI SK SM TR | (72) Inventors:<br>• **Sprljan, Nikola**<br>  **Guildford, Surrey GU1 3LL (GB)**<br>• **Cieplinski, Leszek**<br>  **Guildford, Surrey GU1 2UF (GB)** |
| (71) Applicants:<br>• **Mitsubishi Electric R&D Centre Europe B.V.**<br>  **The Surrey Research Park**<br>  **Guildford, Surrey GU2 7YD (GB)**<br>  Designated Contracting States:<br>  **GB**<br>• **Mitsubishi Electric Corporation**<br>  **Chiyoda-ku**<br>  **Tokyo 100-8310 (JP)**<br>  Designated Contracting States:<br>  **AT BE BG CH CY CZ DE DK EE ES FI FR GR HR HU IE IS IT LI LT LU LV MC MK MT NL NO PL PT RO SE SI SK SM TR** | (74) Representative: **HOFFMANN EITLE**<br>  **Patent- und Rechtsanwälte**<br>  **Arabellastraße 4**<br>  **81925 München (DE)** |

(54) **Weighted motion compensation of video**

(57) A video encoder and decoder are disclosed for predictively encoding and decoding video data. Advantageously, embodiments of the encoder and decoder reduce the number of required bits for the signalling of weighted prediction parameters. In an embodiment, weighting parameters are sent at the most appropriate level of granularity depending on the local characteristics of the data content instead of being tied to the motion vector information. This is achieved by assigning a motion vector to each segment of a macroblock and a single set of weighting parameters for all of the segments of the macroblock. In an alternative embodiment, a macroblock is divided into a first set of segments and a motion vector is assigned to each segment, the macroblock is divided into a second set of segments and a weighting parameter is assigned to each segment wherein the first set of segments is different from the second set of segments. A cost function of different coding modes is performed and the most efficient coding mode is selected. In a further embodiment, the prediction of weighting parameters is performed in order to take advantage of the inter-parameter correlations. In a further embodiment, the entropy coding is adapted to the statistical properties of the parameters and their differences.

Figure 5

EP 2 375 754 A1

**Description**

**Field of the Invention**

The present invention relates to video encoding and decoding.

**Background**

Most modern video compression methods are based on spatio-temporal prediction of pictures, which essentially consists of encoding the difference between the prediction signal and the predicted picture. Generally, the closer in the appropriate metric the prediction signal is to the predicted picture, the better that picture can be compressed, i.e. it can be represented with fewer bits. The prediction is formed by taking decoded samples of previously encoded pictures, or previously encoded blocks of the current picture. Temporal prediction is the critical gain factor in the overall compression efficiency, since typical video signals exhibit significant temporal correlation. Besides compensating for spatial displacement between parts of different pictures by means of motion vectors, by using weighted prediction the changes in luminance levels can be also compensated for. Another prominent technique in encoding is the Rate Distortion Optimisation (RDO), which is widely used to assist in the video coding mode selection for achieving the best possible coding efficiency gain. This process can be described as follows: for a valid coding mode, the bits consumption is obtained and the distortion between the original video data and decoded video data is measured. A cost function J is constructed by using a Lagrange multiplier X to balance the rate R and the distortion D:

$$J = D + \lambda R \qquad \qquad \ldots \ (1)$$

According to the smallest cost value a video encoding mode will be decided for achieving the best possible coding efficiency gain. The RDO process is important for capturing the video coding efficiency gain if several coding modes are possible for given video data.

H.264 / MPEG-4 AVC video coding standard has adopted weighted prediction, where arbitrary multiplicative weighting factors and additive offset factors can be applied to the reference picture predictions. Weighted prediction can generally be represented with the following relation:

$$\mathbf{Y} = o + w\mathbf{X}, \qquad \qquad \ldots \ (2)$$

where $\mathbf{X}$ is a reference picture signal, $\mathbf{Y}$ is the predicted image signal, o is an additive offset weighting parameter and w is a multiplicative weight weighting parameter. A separate offset/weight pair can be assigned to each of the reference picture signals used to predict the current picture. In H.264 / MPEG-4 AVC at most two pictures are used for temporal compensation for any given macroblock. In P pictures only a single prediction originating from a single picture is used, while in B pictures two prediction signals can be used. In the explicit mode, weight and offset are specified at the slice level and their derivation is not defined by the standard. In the implicit mode the weights are computed according to the distance to the referenced pictures, where the relationship between the picture distances and the applied weights are defined by the standard. The standard leaves a provision for applying different explicit weighting parameters for different segments of a slice, down to the size of a macroblock, in a form of memory management control operations (MMCO). This is explained, for example, in US2006/0198440 A1. However, this comes with a considerable penalty in overhead information for weighted prediction parameter sets large enough to be of practical use.

Furthermore, the derivation of the picture-level weighted prediction parameters normally entails some multipass scheme, where picture data has to be processed at least twice. One possibility is just to estimate the parameters, for which the whole picture statistics need to be captured before the actual compression, in order to compute the optimal weighting parameters using some criteria related to the expected compression performance. Since in practice the compression performance utilising picture level weighted prediction cannot be estimated reliably without actually compressing the data, a scheme known as "Picture Level Rate-Distortion Optimisation" can be employed, in which the picture is compressed multiple times, each time with different weighted prediction parameters, including a mode where weighted prediction is disabled, and the best outcome in terms of Lagrangian cost is preserved. This has the disadvantage of very high computational complexity while providing only limited performance improvement.

Since the derivation of the explicit weighting parameters is not defined by the standard, various schemes exist. In WO2007/092215 A2 the following derivation methods are discussed: offset only by subtracting means of two pictures, weight only by dividing means of two pictures, histogram based and linear regression based methods, and also iterative variations of all previous methods, where the parameters are adjusted after motion compensation. The heuristic based methods in WO2007/092215 A2 compute several pairs of parameters, each by using a different derivation method, and then by using a particular metric decide which one would perform the best.

US 2009/0034854 A1 discloses a video encoding and decoding method and apparatus. The video encoding method includes selecting a plurality of reference blocks based on a plurality of motion vectors and setting weights assigned to the plurality of reference blocks independently for each of a plurality of regions of a current block in order to predict and encode the current block, thereby providing a new encoding mode allowing accurate prediction of the current block and thus improving the compression rate of video encoding.

A locally adaptive method of performing weighted prediction is known. This is described for example in European patent application 091170576.4. To adapt to the illumination changes within the picture, the operation of weighted prediction is defined at the local level, where for each picture segment/block a different set of weighting parameters is defined and sent in the part of the bit-stream that conveys parameters for the current block. In the preferred embodiment a picture segment on which the weighted prediction operates is the macroblock (and macroblock sub-partitioning blocks) as defined in H.264 / MPEG-4 AVC. In that context the approach is called here MBWP (MacroBlock Weighted Prediction). For the sake of simpler notation, MBWP is only presented here for the unidirectional prediction case (e.g. P pictures in H.264 / MPEG-4 AVC), with generalisation considerations to multi-reference pictures discussed where required. In that case MBWP can be defined with:

$$\mathbf{MBp} = o + w\mathbf{MBc'} \qquad (3)$$

where **MBc'** is a decoded macroblock, **MBp** is the prediction signal, o is offset and w is weight. **MBc'** can be obtained by means of interpolation in the case of sub-pel precision motion vectors or directly from the previously decoded pictures. **MBp** is used to predict the current macroblock.

In an alternative, the process of weighting is adapted within the macroblock for each pixel:

$$\mathbf{MBp}(n) = f_o(o,n) + f_w(w,n) \cdot \mathbf{MBc'}(n) \qquad (4)$$

where $n$ is the index of the currently processed pixel, functions $f_o()$ and $f_w()$ determine the current offset and weight, respectively, and are dependent on the data available in both encoder and decoder. For instance, these can be the values of the previously processed predicted signal samples $\mathbf{MBc'}(0),...,\mathbf{MBc'}(n-1)$, values of these functions at points $0,...,n-1$, etc.

The prediction signal is added to the decoded difference signal MBr' and the current macroblock **MB'** is then reconstructed as:

$$\mathbf{MB'} = \mathbf{MBp} + \mathbf{MBr'} \qquad (5)$$

The weighting parameters are encoded using spatial prediction and uniform quantisation, followed by entropy coding.

Summary of the Invention

The existing techniques for weighted prediction suffer from a number of problems. For example, the existing teachings suffer from the problem of insufficient efficiency of encoding of the additional syntax elements. In particular, the prediction and coding of the weight and offset parameters is not performed efficiently enough, resulting in too high overhead in the number of bits required for their signalling and therefore relatively low overall compression efficiency.

According to the present invention, there is provided a video encoder operable to predictively encode video data defining a sequence of pictures, each picture divided into a plurality of macroblocks, the encoder being operable to divide each macroblock into a plurality of segments and comprising:

a motion-compensated-data generator operable to process video data (MB) for a macroblock to generate at least one motion vector for the segments of the macroblock and motion-compensated video data;

a weighting parameter calculator operable to calculate at least one set of weighted prediction weighting parameters for the segments of the macroblock;

a weighted-motion-compensated-data generator operable to combine the motion-compensated video data and the at least one set of weighting parameters to generate weighted-motion-compensated-data (MBp) for the macroblock;

a difference-data generator operable to generate difference data (MBr) defining the difference between the video data (MB) for the macroblock and the weighted-motion-compensated-data (MBp) for the macroblock; and

an encoder operable to encode data for the macroblock comprising the difference data (MBr) for the macroblock, motion vector data defining the at least one motion vector for the macroblock, and weighting parameter data defining the at least one set of weighting parameters for the macroblock;

wherein:

the weighting parameter calculator is operable to calculate the at least one set of weighting parameters for the macroblock using different segments from the segments used by the motion-compensated-data-generator to calculate the at least one motion vector for the macroblock.

The present invention also provides a video decoder operable to decode predictively-encoded video data defining a sequence of pictures, each picture divided into a plurality of macroblocks and each macroblock divided into a plurality of segments, the decoder comprising:

a decoder operable to decode the encoded video data to generate decoded difference data (MBr') for a macroblock of a picture, decoded motion vector data defining at least one motion vector for the segments of the macroblock and decoded weighting parameter data defining at least one set of weighted prediction weighting parameters for the segments of the macroblock, wherein the at least one set of weighting parameters applies to segments of the macroblock that are different from the segments to which the at least one motion vector applies;

a motion-compensated-data generator operable to process the decoded motion vector data and previously decoded video data to generate motion-compensated video data (MBc') for the macroblock;

a predicted-data generator operable to generate predicted video data (MBp) for the macroblock by combining the motion-compensated video data (MBc') for the macroblock with the at least one set of weighting parameters for the macroblock derived from the decoded weighting parameter data; and

a data combiner operable to combine the decoded difference data (MBr') for the macroblock with the predicted video data (MBp) for the macroblock.

The present invention also provides a video encoder operable to predictively encode video data defining a sequence of pictures, each picture divided into a plurality of macroblocks, the encoder being operable to divide each macroblock into a plurality of segments and comprising:

a motion-compensated-data generator operable to process video data (MB) for a macroblock to generate at least one motion vector for the segments of the macroblock and motion-compensated video data;

a weighting parameter calculator operable to calculate a respective set of at least two weighted prediction weighting parameters for each of a plurality of segments of the macroblock;

a weighted-motion-compensated-data generator operable to combine the motion-compensated video data and the weighting parameters to generate weighted-motion-compensated-data (MBp) for the macroblock;

a video difference-data generator operable to generate video difference data (MBr) defining the difference between the video data (MB) for the macroblock and the weighted-motion-compensated-data (MBp) for the macroblock;

a motion vector predictor operable to generate at least one predicted motion vector for the macroblock;

a weighting parameter predictor operable to generate a respective set of at least two predicted weighting parameters for each of the plurality of segments of the macroblock;

a motion vector difference data generator operable to generate motion vector difference data defining the difference between the at least one generated motion vector and the at least one predicted motion vector for the macroblock;

a weighting parameter difference data generator operable to generate weighting parameter difference data defining the difference between each generated weighting parameter for a segment and the corresponding predicted weighting parameter for the segment; and

an encoder operable to encode data for the macroblock comprising the video difference data (MBr) for the macroblock, the motion vector difference data for the macroblock, and the weighting parameter difference data for the macroblock;

wherein:

the weighting parameter predictor is operable to generate a predicted set of weighting parameters for a segment by predicting one of the weighting parameters in the set from another of the weighting parameters in the set.

The present invention also provides a video decoder operable to decode predictively-encoded video data defining a sequence of pictures, each picture divided into a plurality of macroblocks and each macroblock divided into a plurality of segments, the decoder comprising:

a decoder operable to decode the encoded video data to generate decoded video difference data (MBr') for a macroblock of a picture, decoded motion vector difference data defining at least one motion vector for the segments of the macroblock and decoded weighting parameter difference data defining a respective set of at least two weighted prediction weighting parameters for each of a plurality of segments of the macroblock, wherein, for at least one of the sets of weighting parameters, one of the weighting parameters in the set is predicted from another of the weighting parameters in the set;

a motion-compensated-data generator operable to process the decoded motion vector difference data and previously decoded video data to generate motion-compensated video data (MBc') for the macroblock;

a weighting parameter generator operable to generate predicted weighting parameters for each of the segments of the macroblock and to combine the predicted weighting parameters with the weighting parameter difference data to generate a respective calculated set of weighting parameters for each segment of the macroblock;

a predicted-data generator operable to generate predicted video data (MBp) for the macroblock by combining the motion-compensated video data (MBc') for the macroblock with the calculated weighting parameters for the macroblock; and

a data combiner operable to combine the decoded difference data (MBr') for the macroblock with the predicted video data (MBp) for the macroblock.

The present invention also provides a video encoder operable to predictively encode video data defining a sequence of pictures, each picture divided into a plurality of macroblocks, the encoder being operable to divide each macroblock into a plurality of segments and comprising:

a motion-compensated-data generator operable to process video data (MB) for a macroblock to generate at least one motion vector for the segments of the macroblock and motion-compensated video data;

a weighting parameter calculator operable to calculate a respective set of at least two weighted prediction weighting parameters for each of a plurality of segments of the macroblock;

a weighted-motion-compensated-data generator operable to combine the motion-compensated video data and the weighting parameters to generate weighted-motion-compensated-data (MBp) for the macroblock;

a difference-data generator operable to generate difference data (MBr) defining the difference between the video data (MB) for the macroblock and the weighted-motion-compensated-data (MBp) for the macroblock; and

an encoder operable to encode data for the macroblock comprising the difference data (MBr) for the macroblock, motion vector data defining the at least one motion vector for the macroblock, and weighting parameter data defining the weighting parameters for the macroblock;

wherein:

the weighting parameter calculator is operable to calculate a set of weighting parameters in accordance with a plurality of different calculation methods; and

the encoder is operable to encode the weighting parameter data using context-adaptive binary arithmetic coding with a different context for each respective calculation method such that the data for each set of weighting parameters is encoded in accordance with its calculation method.

The present invention also provides a video decoder operable to decode predictively-encoded video data defining a sequence of pictures, each picture divided into a plurality of macroblocks and each macroblock divided into a plurality of segments, the decoder comprising:

a decoder operable to decode the encoded video data to generate decoded difference data (MBr') for a macroblock of a picture, decoded motion vector data defining at least one motion vector for the segments of the macroblock and decoded weighting parameter data defining a respective set of at least two weighted prediction weighting parameters for each of a plurality of segments of the macroblock, wherein the decoder is operable to decode encoded video data in which each set of weighting parameters is encoded using context-adaptive binary arithmetic coding which applies a different context to each set of weighting parameters in dependence upon the calculation method of the weighting parameters;

a motion-compensated-data generator operable to process the decoded motion vector data and previously decoded video data to generate motion-compensated video data (MBc') for the macroblock;

a predicted-data generator operable to generate predicted video data (MBp) for the macroblock by combining the motion-compensated video data (MBc') for the macroblock with the weighting parameters for the macroblock derived from the decoded weighting parameter data; and

a data combiner operable to combine the decoded difference data (MBr') for the macroblock with the predicted video data (MBp) for the macroblock.

According to the present invention, there is provided a method of predictively encoding video data defining a sequence of pictures, each picture divided into a plurality of macroblocks, the method comprising processing a macroblock by:

generating at least one motion vector for the segments of the macroblock and motion-compensated video data;

calculating at least one set of weighting parameters for the segments of the macroblock;

combining the motion-compensated video data and the at least one set of weighting parameters to generate weighted-motion-compensated-data (MBp) for the macroblock;

generating difference data (MBr) defining the difference between the video data (MB) for the macroblock and the weighted-motion-compensated-data (MBp) for the macroblock; and

encoding data for the macroblock comprising the difference data (MBr) for the macroblock, motion vector data defining the at least one motion vector for the macroblock, and weighting parameter data defining the at least one set of weighting parameters for the macroblock;

wherein:

the at least one set of weighting parameters for the macroblock is calculated using different segments from the segments used to calculate the at least one motion vector for the macroblock.

In this method:

a single set of weighting parameters may be calculated for the macroblock as a whole; and

a plurality of motion vectors may be calculated comprising a respective motion vector for each segment of the macroblock.

Alternatively, in the method:

the macroblock may be divided into a first set of segments and a respective set of weighting parameters may be calculated for each segment of the first set; and

the macroblock may be divided into a second set of different segments and a respective motion vector may be calculated for each segment of the second set.

The present invention also provides a method of decoding predictively-encoded video data defining a sequence of pictures, each picture divided into a plurality of macroblocks and each macroblock divided into a plurality of segments, the method comprising:

decoding the encoded video data to generate decoded difference data (MBr') for a macroblock of a picture, decoded motion vector data defining at least one motion vector for the segments of the macroblock and decoded weighting parameter data defining at least one set of weighting parameters for the segments of the macroblock, wherein the at least one set of weighting parameters applies to segments of the macroblock that are different from the segments to which the at least one motion vector applies;

processing the decoded motion vector data and previously decoded video data to generate motion-compensated video data (MBc') for the macroblock;

generating predicted video data (MBp) for the macroblock by combining the motion-compensated video data (MBc') for the macroblock with the at least one set of weighting parameters for the macroblock derived from the decoded weighting parameter data; and

combining the decoded difference data (MBr') for the macroblock with the predicted video data (MBp) for the macroblock.

In this decoding method, the encoded video data may be decoded to generate decoded difference data (MBr') for a macroblock, a single set of weighting parameters for the macroblock as a whole and a plurality of motion vectors comprising a respective motion vector for each segment of the macroblock.

Alternatively, in this decoding method, the encoded video data may be decoded to generate decoded difference data (MBr') for a macroblock, a plurality of sets of weighting parameters comprising a respective set of weighting parameters for each segment in a first set of segments of the macroblock, and a plurality of motion vectors comprising a respective motion vector for each segment in a second set of different segments of the macroblock.
The present invention also provides a method of predicatively encoding video data defining a sequence of pictures, each picture divided into a plurality of macroblocks, the method comprising processing a macroblock by:

generating at least one motion vector for the segments of the macroblock and motion-compensated video data;

calculating a respective set of at least two weighting parameters for each of a plurality of segments of the macroblock;

combining the motion-compensated video data and the weighting parameters to generate weighted-motion-compensated-data (MBp) for the macroblock;

generating video difference data (MBr) defining the difference between the video data (MB) for the macroblock and the weighted-motion-compensated-data (MBp) for the macroblock;

generating at least one predicted motion vector for the macroblock;

generating a respective set of at least two predicted weighting parameters for each of the plurality of segments of the macroblock;

generating motion vector difference data defining the difference between the at least one generated motion vector and the at least one predicted motion vector for the macroblock;

generating weighting parameter difference data defining the difference between each generated weighting parameter for a segment and the corresponding predicted weighting parameter for the segment; and

encoding data for the macroblock comprising the video difference data (MBr) for the macroblock, the motion vector difference data for the macroblock, and the weighting parameter difference data for the macroblock;

wherein:

for at least one generated set of weighting parameters for a segment, one of the weighting parameters in the set is predicted from another of the weighting parameters in the set.

In this encoding method, each set of at least two weighting parameters may comprise an offset weighting parameter and a weight weighting parameter, and the weight weighting parameter for a segment may be predicted from the offset weighting parameter for the segment.

The offset weighting parameter for a segment may be generated from the offset weighting parameters of neighbouring segments.

The present invention also provides a method of decoding predictively-encoded video data defining a sequence of pictures, each picture divided into a plurality of macroblocks and each macroblock divided into a plurality of segments, the method comprising:

decoding the encoded video data to generate decoded video difference data (MBr') for a macroblock of a picture, decoded motion vector difference data defining at least one motion vector for the segments of the macroblock and decoded weighting parameter difference data defining a respective set of at least two weighting parameters for each of a plurality of segments of the macroblock, wherein, for at least one of the sets of weighting parameters, one of the weighting parameters in the set is predicted from another of the weighting parameters in the set;

processing the decoded motion vector difference data and previously decoded video data to generate motion-compensated video data (MBc') for the macroblock;

generating predicted weighting parameters for each of the segments of the macroblock and combining the predicted weighting parameters with the weighting parameter difference data to generate a respective calculated set of weighting parameters for each segment of the macroblock;

generating predicted video data (MBp) for the macroblock by combining the motion-compensated video data (MBc') for the macroblock with the calculated weighting parameters for the macroblock; and

combining the decoded difference data (MBr') for the macroblock with the predicted video data (MBp) for the macroblock.

In this decoding method, the generating of predicted weighting parameters for a segment may be performed such that one of the weighting parameters is predicted from another of the weighting parameters.

In this decoding method, the encoded video data may be decoded to generate decoded difference data (MBr') for a macroblock, decoded motion vector difference data defining a respective motion vector for each of a plurality of segments of the macroblock and decoded weighting parameter difference data defining a respective set of at least two weighting parameters for each of a plurality of segments of the macroblock, wherein each set of weighting parameters comprises an offset weighting parameter and a weight weighting parameter, and, for at least one set of weighting parameters, the weight weighting parameter in the set is predicted from the offset weighting parameter in the set.

In the decoding method, for at least one set of weighting parameters for a segment, the offset weighting parameter may be derived from the offset weighting parameters of neighbouring segments.

The present invention also provides a method of predictively encoding video data defining a sequence of pictures, each picture divided into a plurality of macroblocks, the method comprising processing a macroblock by:

generating at least one motion vector for the segments of the macroblock and motion-compensated video data;

calculating a respective set of at least two weighting parameters for each of a plurality of segments of the macroblock;

combining the motion-compensated video data and the weighting parameters to generate weighted-motion-compensated-data (MBp) for the macroblock;

generating difference data (MBr) defining the difference between the video data (MB) for the macroblock and the weighted-motion-compensated-data (MBp) for the macroblock; and

encoding data for the macroblock comprising the difference data (MBr) for the macroblock, motion vector data defining the at least one motion vector for the macroblock, and weighting parameter data defining the weighting parameters for the macroblock;

wherein:

different sets of weighting parameters are calculated using different respective calculation methods; and the weighting parameter data is encoded using context-adaptive binary arithmetic coding with a different context for each respective calculation method such that the data for each set of weighting parameters is encoded in accordance with its calculation method.

In this encoding method, different sets of weighting parameters may be calculated in accordance with a plurality of different calculation methods comprising calculating the parameters without prediction, calculating the parameters from the parameters of neighbouring segments, and calculating one of the parameters in the set by prediction from another of the parameters in the set.

The present invention further provides a method of decoding predictively-encoded video data defining a sequence of pictures, each picture divided into a plurality of macroblocks and each macroblock divided into a plurality of segments, the method comprising:

decoding the encoded video data to generate decoded difference data (MBr') for a macroblock of a picture, decoded motion vector data defining at least one motion vector for the segments of the macroblock and decoded weighting parameter data defining a respective set of at least two weighting parameters for each of a plurality of segments of the macroblock, wherein the decoding is performed to decode encoded video data in which each set of weighting parameters is encoded using context-adaptive binary arithmetic coding which applies a different context to each set of weighting parameters in dependence upon the calculation method of the weighting parameters;

processing the decoded motion vector data and previously decoded video data to generate motion-compensated video data (MBc') for the macroblock;

generating predicted video data (MBp) for the macroblock by combining the motion-compensated video data (MBc') for the macroblock with the weighting parameters for the macroblock derived from the decoded weighting parameter data; and

combining the decoded difference data (MBr') for the macroblock with the predicted video data (MBp) for the macroblock.

The present invention yet further provides a computer program product, such as a storage medium or a signal, carrying computer program instructions to program a programmable processing apparatus to become operable to perform an encoding and/or decoding method as set out above.

Brief Description of the Drawings

Figures 1A, 1B and 1C are examples of segment shapes into which a macroblock may be divided for coding in an embodiment.

Figure 2 shows a block diagram of an encoder according to an embodiment of the invention.

Figure 3 shows an RDO calculator and data selector for selecting an encoding scheme according to an embodiment of the invention.

Figure 4 shows a flow diagram for the encoding of global macroblock weighted prediction parameters according to an embodiment of the invention.

Figure 5 shows a flow diagram for encoding according to an embodiment of the invention.

Figure 6 shows a decoder according to an embodiment of the invention.

Figure 7 shows a programmable processing apparatus operable to act as an encoder according to an embodiment of the invention.

Figure 8 shows a programmable processing apparatus operable to act as a decoder according to an embodiment of the invention.

Embodiments of the Invention

As will be described below, an embodiment of the present invention addresses the problems of the prior art by decreasing the number of bits required for the signalling of the weighted prediction parameters by improving the encoding and decoding process for those parameters.

This is achieved using a number of features, either alone or in combination.

According to one feature, weighting parameters are sent at the most appropriate level of granularity depending on the local characteristics of the data content instead of being tied to the motion vector information.

According to another feature, the prediction of weighting parameters is performed in order to take advantage of the inter-parameter correlations.

According to another feature, the entropy coding is adapted to the statistical properties of the resulting parameters and their differences.

Encoder

In the previously known techniques, the weighted prediction parameters are always sent together with motion vectors. More specifically, the motion vector information, consisting of reference picture index, prediction type and the displacement vector value, is sent either at the level of the whole macroblock or for smaller segments, which may be rectangular, hook-shaped, and in principle of arbitrary shape.

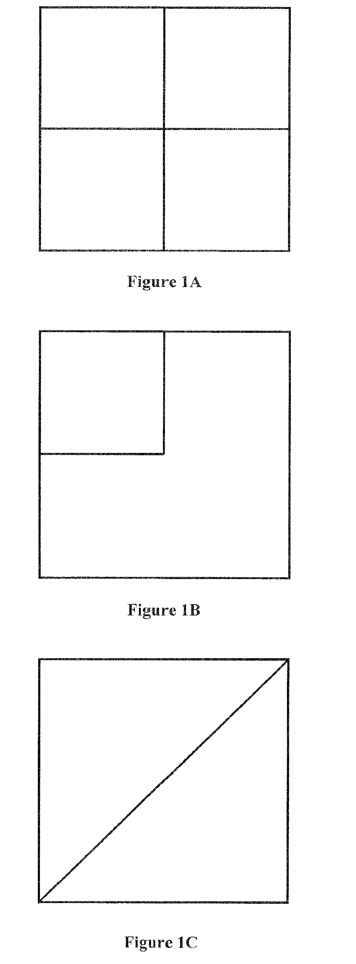

Some examples of segment shapes into which a macroblock may be divided in video coding are shown in Figures 1A, 1B and 1C.

The decision on the precise partitioning of a particular macroblock is made based on the cost trade-off between sending the overhead information for partitioning and the associated improvement in prediction quality. In known techniques, the weighted prediction parameters are sent at exactly the same level as the motion vector information or globally for an entire macroblock. However, transmitting weighting parameters at exactly the same level as the motion vectors may not be optimal, for example, when neighbouring areas of the image have different motion characteristics because they correspond to different objects but have similar change in the illumination due to being illuminated by the same light source. Global weighting parameters are not desired when the luminance varies over a macroblock.

In a first embodiment of the present invention, the weighted prediction signalling is decoupled from motion vector signalling below the macroblock level.

Two options are available to the encoder of the present embodiment. The first option is to signal the weighted prediction parameters together with the motion information as in the technique described in EP 09170576.4. The second option is to send one set of weighted prediction parameters for the whole macroblock, i.e. global macroblock weighted prediction parameters. The encoder makes a decision between these two macroblock WP (weighted prediction) coding modes based on their respective coding efficiency benefit.

This is done by calculating the respective sets of weighted prediction parameters and their associated distortion and coding cost for the same macroblock segments as the motion vectors, and then calculating the single set of weighted prediction parameters for the whole macroblock and its associated distortion and coding cost. The encoder then selects the macroblock MBWP coding mode which leads to lower overall cost.

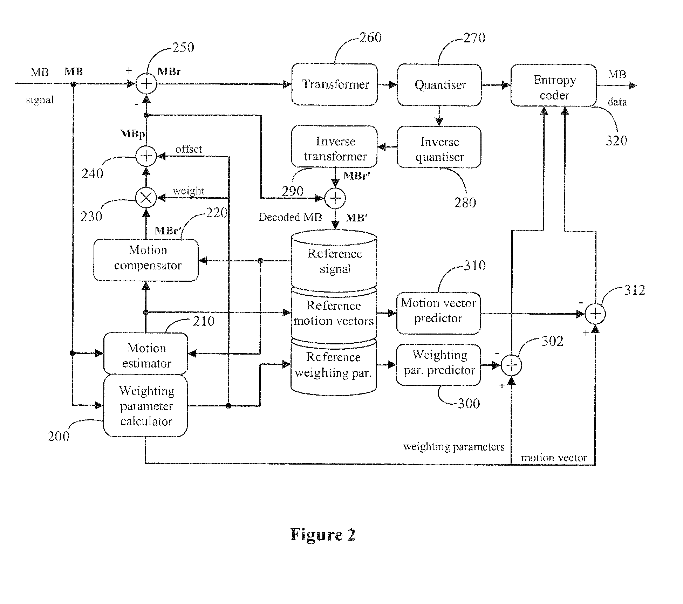

An encoder according to this embodiment is shown in Figure 2.

Referring to Figure 2, the motion estimator 210 and motion compensator 220 act as a motion-compensated-data generator which processes video data MB for a segment of a macroblock to generate a motion vector for the segment and applies the motion vector to the video data of the segment to generate motion-compensated video data for the segment.

The weighting parameter calculator 200 acts as a weighting parameter calculator which calculates weighting parameters for the segment. The weighting parameters for a segment can be different from the weighting parameters used for a different segment in the same macroblocks. The multiplier 230 and the adder 240 act as a weighted-motion-compensated-data generator which combines the motion-compensated video data and the weighting parameters to generate weighted-motion-compensated-data MBp for the segment. The adder 250 acts as a difference-data generator which generates difference data MBr defining a difference between the input video data MB for the segment and the weighted-motion-compensated-data MBp.

The motion vector predictor 310 generates predicted motion vectors for the segments of a macroblock based on previously processed data. In addition, the weighting parameter predictor 300 generates predicted weighting parameters for the segments based on previously processed data.

The adders 312 and 302 act as a motion vector difference data generator and a weighting parameter difference data generator, respectively and calculate the difference between the generated motion vectors and the predicted motion vectors as well as the difference between the generated weighting parameters and the predicted weighting parameters.

The entropy coder 320 acts as an encoder which encodes data for the segment comprising the video difference data MBr for the segment, the motion vector difference data for the segment, and the weighting parameter difference data for the segment. This is the data which is transmitted to the decoder, described later, for decoding.

The encoder described above calculates a weight weighting parameter and an offset weighting parameter for each segment of a macroblock. A motion vector is also calculated for the same segment.

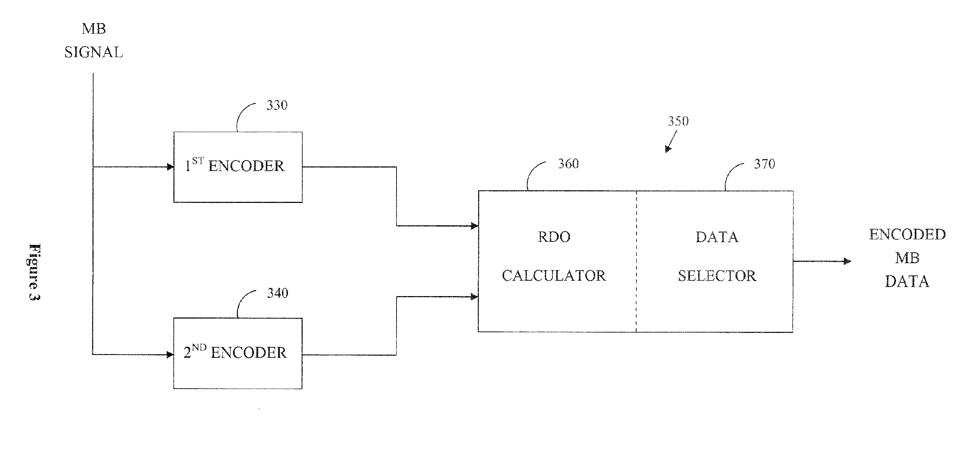

As shown in Figure 3, a second encoder is also provided in the present embodiment.

The second encoder comprises the same components as the first encoder described above and generates motion vectors for the same segments of the same macroblock as the first encoder. However, unlike the first encoder, the second encoder is arranged to calculate a single set of weighting parameters for all of the segments of the macroblock.

As shown in Figure 3, the encoded macroblock data from the first and second encoders is input to a rate-distortion-optimisation (RDO) calculator 360 and data selector 370.

The RDO calculator 360 calculates a cost, J, of the coding gains provided by the first and second encoders.

The data selector 370 then selects the encoder with the greatest efficiency gain and outputs the encoded data from the selected encoder as the encoded MB data.

In this way, the number of bits required for the signalling of weighted prediction parameters is decreased by selecting the most efficient MBWP mode.

In a preferred embodiment, the decision on macroblock MBWP coding mode is signalled using a single flag on the macroblock level which specifies which of the two options is in use.

In an alternative embodiment, a single macroblock MBWP coding mode is set for the whole picture, selection of which is either based on the expected coding benefit or on the cost calculated in picture-level rate-distortion optimisation.

Here the coding modes of macroblock segments can be of type where motion vectors are encoded explicitly as well as of the type where motion vectors are calculated using data from the neighbouring macroblocks and macroblock segments. These coding modes are known as "skip" and "direct" modes, where motion vectors are calculated by means of prediction from the motion vectors of the already processed macroblock segments. In skip and direct macroblock and macroblock segment coding modes both motion vectors and the motion prediction residual are not coded, so these coding modes can be signalled with a single flag, which results in significant bit rate savings. The weighted prediction parameters for skipped segments can be derived in the same way as motion vectors, for instance by using prediction. This prediction for instance can be implemented by means of averaging operation using two first neighbouring segments, as described in EP 09170576.4.

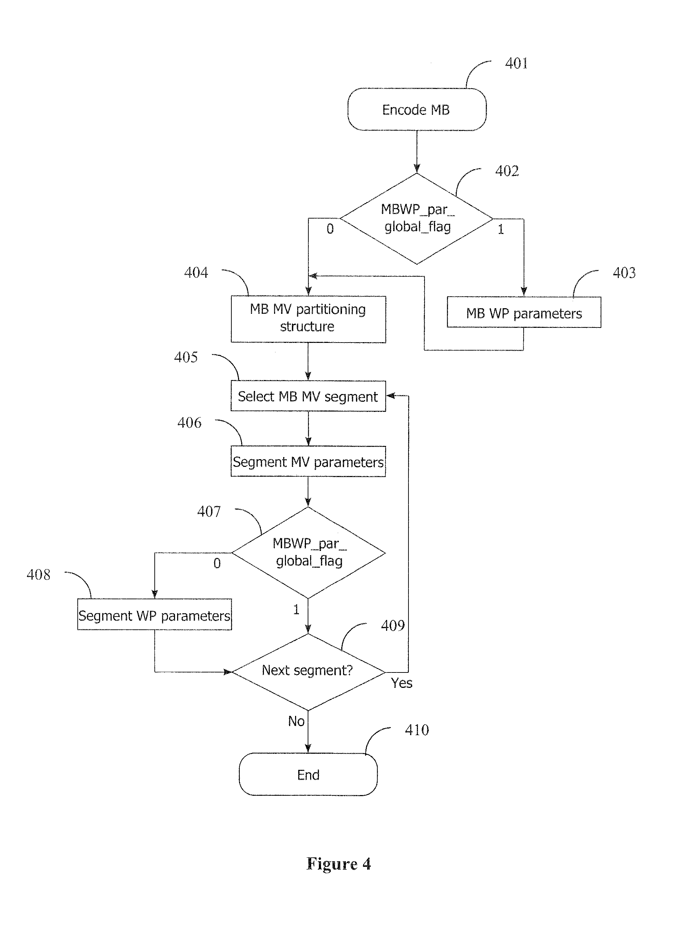

A flow diagram showing the processing operations performed by the present embodiment for the encoding of global macroblock weighted prediction parameters is shown in the Figure 4.

In Figure 4, MBWP_par_global_flag signals that the WP parameters are defined for the whole macroblock. If the flag is equal to 1, then the parameters are encoded within MB WP parameters block. When the flag is 0, the WP parameters are encoded for each macroblock segment, as defined by the MV (motion vector) partitioning.

More options are possible for the level of detail of the weighted prediction parameters, where the partitioning for the signalling of the weighted prediction parameters is decoupled from the partitioning of the motion vectors.

For example, according to a second embodiment, a macroblock is partitioned into a first set of segments for the weighted prediction parameters and a second set of different segments for the motion vectors. In this way, the partitioning of a macroblock for motion vectors is defined independently from the partitioning of the macroblock for the weighted prediction parameters. This allows either use of encoding which partitions the macroblock into different segments for the weighted prediction parameters and the motion vectors or encoding which partitions the macroblock into the same segments for the weighted prediction parameters and the motion vectors.

The partitioning of the macroblock for both motion vector and weighting parameter information can be of any kind, for instance a quadtree rectangular or binary tree triangular partitioning can be used.

The design of the encoder shown in Figure 2 is also suitable for the encoding of an MB signal according to the second embodiment.

However, the encoder of the second embodiment differs in that the motion estimator 210 and weighting parameter calculator 200 are not restricted to processing data from the same segment of a macroblock and the segments of the same macroblock can be defined differently for the motion vectors and the weighting parameters.

A first and second encoder may be provided in the second embodiment as shown in Figure 3.

The first encoder calculates encoded data with the segments of a macroblock defined differently for motion vectors and weighting parameters.

The second encoder calculates encoded data with weighting parameters and motion vectors calculated for the same segments of the macroblock.

As described previously for the first embodiment, the RDO calculator 360 and data selector 370 determine the encoder with the greatest efficiency gain and select that encoder for outputting encoded MB data.

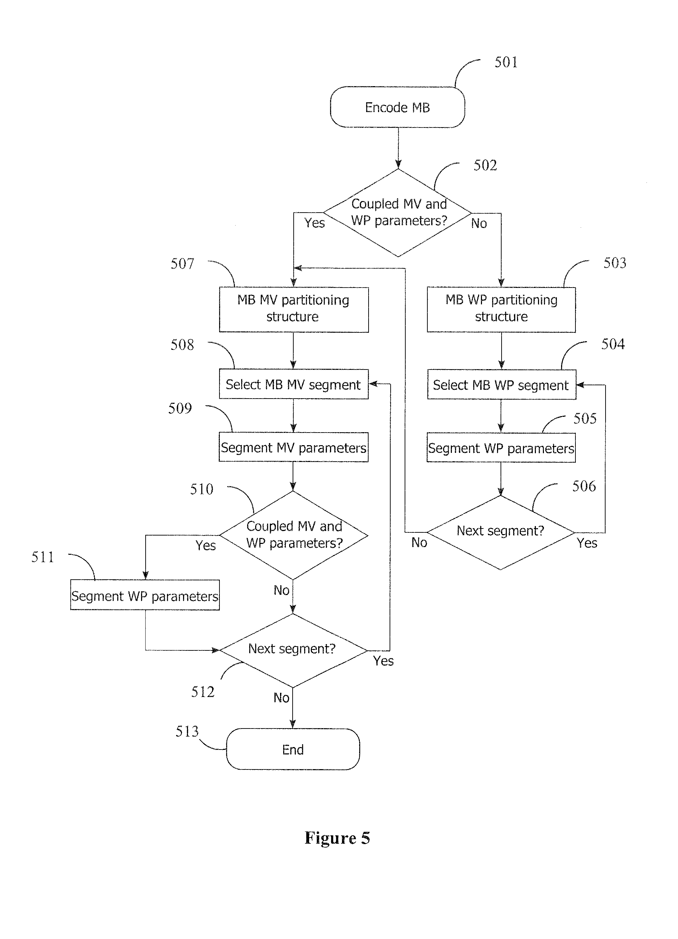

A flow diagram of the processing operations for encoding according to the second embodiment is shown in Figure 5.

In summary, the encoder of the first embodiment performs an RDO calculation to select between (i) data encoding in which a macroblock is divided into segments with a respective motion vector for each segment and a single set of weighting parameters for the macroblock as a whole and (ii) data encoding in which the macroblock is divided into segments with a respective motion vector and a respective set of weighting parameters for each of the segments (that is, the segments for the motion vectors and the weighting parameters are the same). On the other hand, the encoder of the second embodiment performs an RDO calculation to select between (i) data encoding in which a macroblock is divided into a first set of segments with a respective motion vector for each segment and a second set of different segments with a respective set of weighting parameters for each segment (that is, the segments for the motion vectors and the segments for the weighting parameters are different) and (ii) data encoding in which the macroblock is divided into the same segments with a respective motion vector and a respective set of weighting parameters for each of the segments (that is, the segments for the motion vectors and the weighting parameters are the same).

In an alternative embodiment, an encoder may be provided which performs an RDO calculation to select between (i) data encoding in which a macroblock is divided into segments with a respective motion vector for each segment and a single set of weighting parameters for the macroblock as a whole and (ii) data encoding in which a macroblock is divided into a first set of segments with a respective motion vector for each segment and a second set of different segments with a respective set of weighting parameters for each segment (that is, the segments for the motion vectors and the weighting parameters are different).

In all of these embodiments, an additional mode of prediction is provided in order to further improve the prediction of the weighting parameters. More particularly, as will be described below, the embodiments derive some of the parameters from other parameters within the same segment. This is referred to as intra-segment prediction.

In the techniques described in EP 09170576.4, spatio-temporal prediction of the weighted prediction parameters is performed in order to enable more efficient coding of the resulting differences. Either neighbouring macroblocks in the same picture or the macroblocks from the previously decoded pictures can be used to form the prediction signal. This prediction can be implemented by means of an averaging operation using two first neighbouring blocks, as described in EP 09170576.4 or it can utilise more than two neighbouring blocks and use weighting in the prediction operator, or it can employ different operators, for example median.

In the present embodiments, a weight weighting parameter is predicted by the weighting parameter predictor 300 using the offset weighting parameter.

This additional prediction mode can be applied on its own or in combination with spatio-temporal prediction. The optimal, or near optimal, prediction mode for a particular segment is selected using rate-distortion optimisation or an algorithm with experimentally verified parameters.

In an embodiment, one of two prediction modes is used in dependence upon the respective rate-distortion cost of each mode. The encoder arrangement of Figure 3 is suitable for encoding data according to the different modes and selecting the encoded MB data with the lowest cost.

When intra-segment prediction is selected for a particular segment, the offset parameter for the segment is still predicted from the neighbouring segments. The decision on the use of intra-segment prediction is based on the value of the offset parameter. The prediction for the weight parameter is formed as the sign-inverted value of the offset parameter, i.e. pred_weight = -offset. The prediction is only performed when the absolute value of the offset parameter is greater than 3, i.e. abs(offset) > 3. Subsequently, pred_weight is subtracted from weight parameter and the result encoded.

Turning now to the entropy coding of the parameters performed by the entropy encoder 320, the weighting parameters and their predictors of a macroblock segment are entropy coded using context-adaptive binary arithmetic coder (CABAC) and the efficiency of the coding is improved by using additional contexts based on previously encoded data.

More particularly, in the preferred embodiment, there are 3 cases for the encoding of the weighted prediction parameters:

1. the parameters are not predicted at all;

2. the parameters are predicted from the neighbouring segments;

3. the weight parameter is predicted from the offset parameter.

For each of these three cases, a separate context is used for each of the weighted prediction parameters.

In an alternative embodiment, when neighbouring weighting parameters are non-zero (non-default) a different context is used than when these parameters are all zero (default).

The value of the weighted prediction parameter par (either predicted or not predicted) is binarised (bin number x is denoted as bin(x)) in the following way, where different bins can use different contexts:

- Context 0: Data in bin(0) contains the result of logic operation ($par != 0$)
- Context 1: if (bin(0) $!= 0$) then encode bin($x$), for $x=1, .., M$, where $M$ is a constant. Data in bin($x$) contains the result of logic operation (abs ($par$) > $x$). Values of such logic operation are encoded in the order of increasing $x$, last $x$ being one for which ($x==M$) or (bin ($x$) == 0).
- Context 2: if (bin(0) != 0) then encode sign of $par$. If ($par < 0$) then sign=0, otherwise sign=1.
- If (abs (par) > $M$) then encode abs ($par$) - ($M$+1) using variable length codes (for instance, Golomb codes).

Decoder

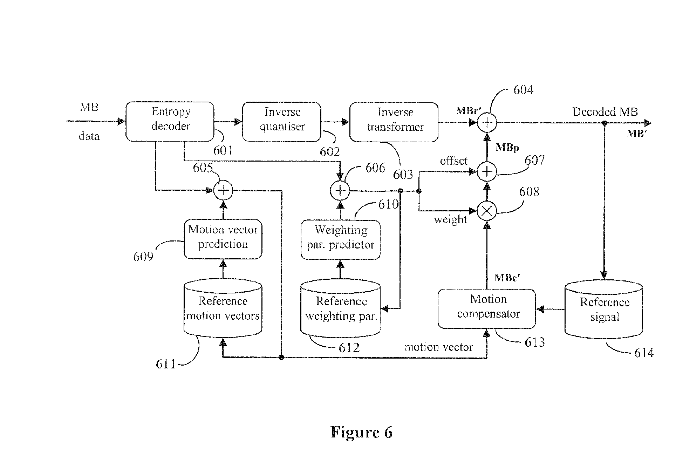

A diagram of a decoder according to an embodiment of the invention is presented in Figure 6.

The input stream of the current macroblock is entropy decoded by entropy decoder 601, resulting in the following data: quantised transformed samples of the current macroblock, motion vector data and weighting parameter data. All and any of these can be difference signals obtained by subtraction from the previously decoded data, and in that case prediction needs to be done, e.g. weighting parameters are predicted from the previously decoded ones, similarly as it is done for encoding, as shown in Figure 2.

Motion compensation is then performed, using the decoded motion vectors and the previously decoded reference signal. Such motion compensated signal is then modified by applying weight and offset. The weighting parameters (i.e. weight and offset) may be decoupled from the motion vectors, as described above. For example, there may be one set of weighting parameter for an entire macroblock but a respective motion vector for each segment of the macroblock, or different segments of a macroblock may be used to define the motion vectors and weighting parameters.

The residual macroblock signal is obtained by inverse quantisation by inverse quantiser 602 and inverse spatial transform by inverse spatial transformer 603, after which the weighted prediction signal is added to obtain the decoded macroblock samples.

As noted above, the decision on macroblock MBWP mode may be signalled using a single flag on the macroblock level. The decoder reads the flag and decodes the weighted prediction parameters in accordance with its value.

It will be understood from the above that according to an embodiment, the entropy decoder 601, the inverse quantiser 602 and the inverse transformer 603 operate as a decoder which decodes the encoded video data for a segment of a picture to generate decoded difference data MBr' for the segment, motion data for the segment and weighting parameter data for the segment. The motion vector predictor 609, adder 605 and the motion compensator 613 act as a motion-compensated-data generator which processes the motion data together with previously decoded video data to generate motion-compensated video data MBc' for the segment. The weighting parameter predictor 610, adder 606, multiplier 608 and adder 607 act as a predicted-data generator which generates predicted video data MBp for the segment by combining the motion-compensated video data MBc' for the segment with weighting parameters for the segment derived from the decoded weighting parameter data. As noted above, the weighting parameters for a segment may be different from the weighting parameters used for a different segment in the same picture. The adder 604 acts as a data combiner which combines the decoded difference data MBr' for the segment with the predicted video data MBp for the segment, thereby generating overall decoded video data MB' for the segment.

It will be further understood from the description above that the decoder is operable to decode encoded video data to generate decoded difference data (MBr') for a macroblock of a picture, decoded motion vector data defining at least one motion vector for the segments of the macroblock and decoded weighting parameter data defining at least one set of weighting parameters for the segments of the macroblock, wherein the at least one set of weighting parameters applies to segments of the macroblock that are different from the segments to which the at least one motion vector applies. The decoder is also operable to generate decoded weighting parameter data wherein, for at least one of the sets of weighting parameters, one of the weighting parameters is predicted from another of the weighting parameters. Yet further, the decoder is operable to decode encoded video data in which each set of weighting parameters is encoded using context-adaptive binary arithmetic coding which applies a different context to each set of weighting parameters in dependence upon the calculation method of the weighting parameters.

**Modifications and Variations**

Many modifications and variations can be made to the embodiments described above.

For example, Figure 3 shows a data selector arranged in the embodiments above to select between a first and second encoder in dependence upon an RDO calculation of the encoded data from the first and second encoders. In an alternative arrangement, there is only one encoder and the encoder is operable to encode and store data according to a plurality of coding schemes. An RDO calculation is performed with the encoder operating according to each of a plurality of coding schemes to determine the coding scheme that provides the best efficiency gain. The encoder is then operated with the most efficient coding scheme for the MB signal. Advantageously, according to the above modification there is no need for a data selector and only one encoder is required.

In another embodiment, the macroblock skip mode is re-defined in such a way that in addition to predicting the motion vector information from the neighbouring blocks the weighted prediction parameters are also derived using criteria that take into account the modes and parameters used in the neighbouring blocks. The direct mode is re-defined in a similar way, i.e. the weighted prediction parameters are derived in addition to the motion vector information.

In the embodiments described above, unidirectional prediction is performed, resulting in a set of weighting parameters comprising a pair of weighting parameters for each segment or the macroblock as a whole, namely a weight weighting parameter and an offset weighting parameter. However, it will be appreciated that embodiments may also perform bidirectional coding and in general multiple-reference coding, and in these cases each set of weighting parameters would comprise more than two weighting parameters.

Other modifications are, of course, possible.

In particular, although the components of the decoder and the encoder described above comprise hardware components, the decoder and/or the encoder may be implemented using software and/or firmware. Similarly, the decoder and/or encoder may comprise a combination of hardware and software/firmware components.

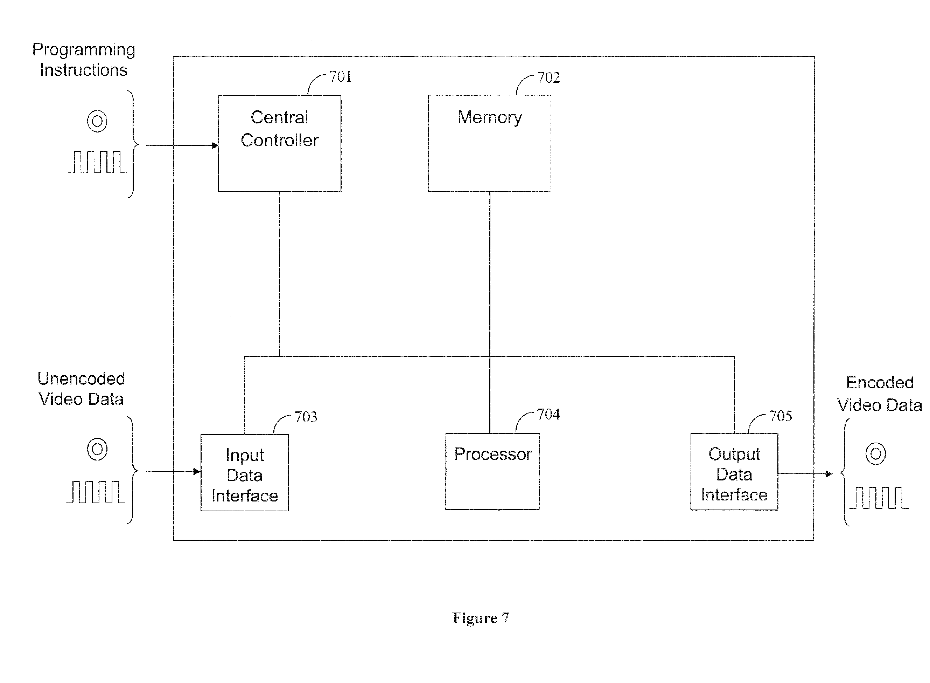

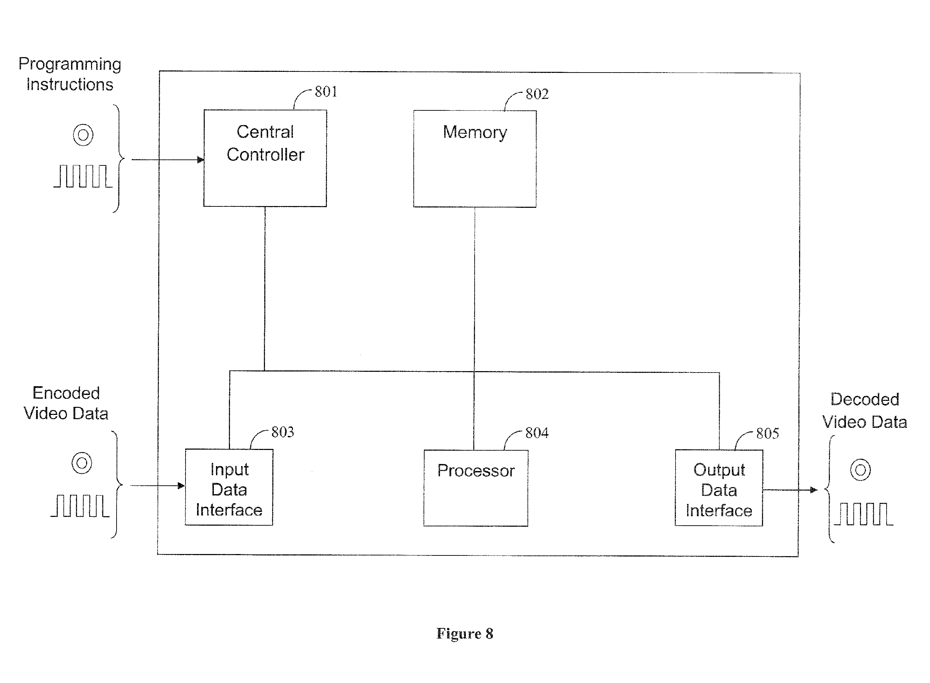

Accordingly, an embodiment of the present invention comprises a computer program product, in the form of a storage device or a signal, carrying computer program instructions to program a programmable processing apparatus to become operable to perform the processing operations described above. Suitable programmable processing apparatus for the encoding and decoding of data are respectively shown in Figures 7 and 8.

The foregoing description of embodiments of the invention has been presented for the purpose of illustration and description. It is not intended to be exhaustive or to limit the invention to the precise form disclosed. Alternations, modifications and variations can be made without departing from the scope of the present invention.

**Claims**

1. A video encoder operable to predicatively encode video data defining a sequence of pictures, each picture divided into a plurality of macroblocks, the encoder being operable to divide each macroblock into a plurality of segments and comprising:

   a motion-compensated-data generator (210, 220) operable to process video data (MB) for a macroblock to generate at least one motion vector for the segments of the macroblock and motion-compensated video data;
   a weighting parameter calculator (200) operable to calculate at least one set of weighting parameters for the segments of the macroblock;
   a weighted-motion-compensated-data generator (230, 240) operable to combine the motion-compensated video data and the at least one set of weighting parameters to generate weighted-motion-compensated-data (MBp) for the macroblock;
   a difference-data generator (250) operable to generate difference data (MBr) defining the difference between the video data (MB) for the macroblock and the weighted-motion-compensated-data (MBp) for the macroblock; and
   an encoder (260, 270, 320) operable to encode data for the macroblock comprising the difference data (MBr) for the macroblock, motion vector data defining the at least one motion vector for the macroblock, and weighting parameter data defining the at least one set of weighting parameters for the macroblock;

wherein:

the weighting parameter calculator (200) is operable to calculate the at least one set of weighting parameters for the macroblock using different segments from the segments used by the motion-compensated-data-generator (210, 220) to calculate the at least one motion vector for the macroblock.

**2.** A video encoder according to Claim 1, wherein:

the weighting parameter calculator (200) is operable to calculate a single set of weighting parameters for a macroblock as a whole; and
the motion-compensated-data-generator (210, 220) is operable to calculate a plurality of motion vectors comprising a respective motion vector for each segment of the macroblock.

**3.** A video encoder according to Claim 1, wherein:

the weighting parameter calculator (200) is operable to divide a macroblock into a first set of segments and to calculate a respective set of weighting parameters for each segment of the first set; and
the motion-compensated-data-generator (210, 220) is operable to divide the macroblock into a second set of different segments and to calculate a respective motion vector for each segment of the second set.

**4.** A video decoder operable to decode predictively-encoded video data defining a sequence of pictures, each picture divided into a plurality of macroblocks and each macroblock divided into a plurality of segments, the decoder comprising:

a decoder (601, 602, 603) operable to decode the encoded video data to generate decoded difference data (MBr') for a macroblock of a picture, decoded motion vector data defining at least one motion vector for the segments of the macroblock and decoded weighting parameter data defining at least one set of weighting parameters for the segments of the macroblock, wherein the at least one set of weighting parameters applies to segments of the macroblock that are different from the segments to which the at least one motion vector applies;
a motion-compensated-data generator (609, 611, 613) operable to process the decoded motion vector data and previously decoded video data to generate motion-compensated video data (MBc') for the macroblock;
a predicted-data generator (606, 610, 612, 607, 608) operable to generate predicted video data (MBp) for the macroblock by combining the motion-compensated video data (MBc') for the macroblock with the at least one set of weighting parameters for the macroblock derived from the decoded weighting parameter data; and
a data combiner (604) operable to combine the decoded difference data (MBr') for the macroblock with the predicted video data (MBp) for the macroblock.

**5.** A video decoder according to claim 4, wherein the decoder (601, 602, 603) is operable to decode the encoded video data to generate decoded difference data (MBr') for a macroblock, a single set of weighting parameters for the macroblock as a whole and a plurality of motion vectors comprising a respective motion vector for each segment of the macroblock.

**6.** A video decoder according to claim 4, wherein the decoder (601, 602, 603) is operable to decode the encoded video data to generate decoded difference data (MBr') for a macroblock, a plurality of sets of weighting parameters comprising a respective set of weighting parameters for each segment in a first set of segments of the macroblock, and a plurality of motion vectors comprising a respective motion vector for each segment in a second set of different segments of the macroblock.

**7.** A video encoder operable to predictively encode video data defining a sequence of pictures, each picture divided into a plurality of macroblocks, the encoder being operable to divide each macroblock into a plurality of segments and comprising:

a motion-compensated-data generator (210, 220) operable to process video data (MB) for a macroblock to generate at least one motion vector for the segments of the macroblock and motion-compensated video data;
a weighting parameter calculator (200) operable to calculate a respective set of at least two weighting parameters for each of a plurality of segments of the macroblock;

a weighted-motion-compensated-data generator (230, 240) operable to combine the motion-compensated, video data and the weighting parameters to generate weighted-motion-compensated-data (MBp) for the macroblock;

a video difference-data generator (250) operable to generate video difference data (MBr) defining the difference between the video data (MB) for the macroblock and the weighted-motion-compensated-data (MBp) for the macroblock;

a motion vector predictor (310) operable to generate at least one predicted motion vector for the macroblock;

a weighting parameter predictor (300) operable to generate a respective set of at least two predicted weighting parameters for each of the plurality of segments of the macroblock;

a motion vector difference data generator (312) operable to generate motion vector difference data defining the difference between the at least one generated motion vector and the at least one predicted motion vector for the macroblock;

a weighting parameter difference data generator (300) operable to generate weighting parameter difference data defining the difference between each generated weighting parameter for a segment and the corresponding predicted weighting parameter for the segment; and

an encoder (260, 270, 320) operable to encode data for the macroblock comprising the video difference data (MBr) for the macroblock, the motion vector difference data for the macroblock, and the weighting parameter difference data for the macroblock;

wherein:

the weighting parameter predictor (300) is operable to generate a predicted set of weighting parameters for a segment by predicting one of the weighting parameters in the set from another of the weighting parameters in the set.

8. A video encoder according to Claim 7, wherein each set of weighting parameters comprises an offset weighting parameter and a weight weighting parameter, and the weighting parameter predictor (300) is operable to generate the weight weighting parameter for a segment from the offset weighting parameter for the segment.

9. A video encoder according to Claim 8, wherein the weighting parameter predictor (300) is operable to generate the offset weighting parameter for a segment from the offset weighting parameters of neighbouring segments.

10. A video decoder operable to decode predictively-encoded video data defining a sequence of pictures, each picture divided into a plurality of macroblocks and each macroblock divided into a plurality of segments, the decoder comprising:

a decoder (601, 602, 603) operable to decode the encoded video data to generate decoded video difference data (MBr') for a macroblock of a picture, decoded motion vector difference data defining at least one motion vector for the segments of the macroblock and decoded weighting parameter difference data defining a respective set of at least two weighting parameters for each of a plurality of segments of the macroblock, wherein, for at least one of the sets of weighting parameters, one of the weighting parameters in the set is predicted from another of the weighting parameters in the set;

a motion-compensated-data generator (609, 611, 613) operable to process the decoded motion vector difference data and previously decoded video data to generate motion-compensated video data (MBc') for the macroblock;

a weighting parameter generator (606, 610, 612) operable to generate predicted weighting parameters for each of the segments of the macroblock and to combine the predicted weighting parameters with the weighting parameter difference data to generate a respective calculated set of weighting parameters for each segment of the macroblock;

a predicted-data generator (607, 608) operable to generate predicted video data (MBp) for the macroblock by combining the motion-compensated video data (MBc') for the macroblock with the calculated weighting parameters for the macroblock; and

a data combiner (604) operable to combine the decoded difference data (MBr') for the macroblock with the predicted video data (MBp) for the macroblock.

11. A video decoder according to Claim 10, wherein the decoder (601, 602, 603) is operable to decode the encoded video data to generate decoded difference data (MBr') for a macroblock, decoded motion vector difference data defining a respective motion vector for each of a plurality of segments of the macroblock and decoded weighting parameter difference data defining a respective set of weighting parameters for each of a plurality of segments of the macroblock, wherein each set of weighting parameters comprises an offset weighting parameter and a weight weighting parameter, and, for at least one set of weighting parameters, the weight weighting parameter in the set is predicted from the offset weighting parameter in the set.

**12.** A video decoder according to Claim 11, wherein, for at least one set of weighting parameters for a segment, the offset weighting parameter is derived from the offset weighting parameters of neighbouring segments.

**13.** A video encoder operable to predictively encode video data defining a sequence of pictures, each picture divided into a plurality of macroblocks, the encoder being operable to divide each macroblock into a plurality of segments and comprising:

a motion-compensated-data generator (210, 220) operable to process video data (MB) for a macroblock to generate at least one motion vector for the segments of the macroblock and motion-compensated video data;
a weighting parameter calculator (200) operable to calculate a respective set of at least two weighting parameters for each of a plurality of segments of the macroblock;
a weighted-motion-compensated-data generator (230, 240) operable to combine the motion-compensated video data and the weighting parameters to generate weighted-motion-compensated-data (MBp) for the macroblock;
a difference-data generator (250) operable to generate difference data (MBr) defining the difference between the video data (MB) for the macroblock and the weighted-motion-compensated-data (MBp) for the macroblock; and
an encoder (260, 270, 320) operable to encode data for the macroblock comprising the difference data (MBr) for the macroblock, motion vector data defining the at least one motion vector for the macroblock, and weighting parameter data defining the weighting parameters for the macroblock;

wherein:

the weighting parameter calculator (200) is operable to calculate a set of weighting parameters in accordance with a plurality of different calculation methods; and
the encoder (260, 270, 320) is operable to encode the weighting parameter data using context-adaptive binary arithmetic coding with a different context for each respective calculation method such that the data for each set of weighting parameters is encoded in accordance with its calculation method.

**14.** A video encoder according to Claim 13, wherein the weighting parameter calculator (200) is operable to calculate a set of weighting parameters in accordance with a plurality of different calculation methods comprising calculating the parameters without prediction, calculating the parameters from the parameters of neighbouring segments, and calculating one of the parameters in the set by prediction from another of the parameters in the set.

**15.** A video decoder operable to decode predictively-encoded video data defining a sequence of pictures, each picture divided into a plurality of macroblocks and each macroblock divided into a plurality of segments, the decoder comprising:

a decoder (601, 602, 603) operable to decode the encoded video data to generate decoded difference data (MBr') for a macroblock of a picture, decoded motion vector data defining at least one motion vector for the segments of the macroblock and decoded weighting parameter data defining a respective set of at least two weighting parameters for each of a plurality of segments of the macroblock, wherein the decoder is operable to decode encoded video data in which each set of weighting parameters is encoded using context-adaptive binary arithmetic coding which applies a different context to each set of weighting parameters in dependence upon the calculation method of the weighting parameters;
a motion-compensated-data generator (609, 611, 613) operable to process the decoded motion vector data and previously decoded video data to generate motion-compensated video data (MBc') for the macroblock;
a predicted-data generator (606, 610, 612, 607, 608) operable to generate predicted video data (MBp) for the macroblock by combining the motion-compensated video data (MBc') for the macroblock with the weighting parameters for the macroblock derived from the decoded weighting parameter data; and
a data combiner (604) operable to combine the decoded difference data (MBr') for the macroblock with the predicted video data (MBp) for the macroblock.

Figure 1A

Figure 1B

Figure 1C

Figure 2

MB
SIGNAL

330

1ST ENCODER

340

2ND ENCODER

350

360

RDO
CALCULATOR

370

DATA
SELECTOR

ENCODED
MB
DATA

Figure 3

Figure 4

Figure 5

**Figure 6**

EP 2 375 754 A1

Programming
Instructions

Unencoded
Video Data

Encoded
Video Data

Central
Controller — 701

Memory — 702

Input
Data
Interface — 703

Processor — 704

Output
Data
Interface — 705

Figure 7

Figure 8

Europäisches
Patentamt

European
Patent Office

Office européen
des brevets

# EUROPEAN SEARCH REPORT

Application Number

EP 10 15 9475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/033953 A1 (THOMSON LICENSING [FR]; YIN PENG [US]; BOYCE JILL MACDONALD [US]; TOUR) 30 March 2006 (2006-03-30) | 1,2,4,5 | INV. H04N7/50 H04N7/26 |
| A | * page 2, line 1; figure 1 * * page 3, line 1 - line 11 * | 3,6 | |
| X,D | WO 2009/017301 A1 (SAMSUNG ELECTRONICS CO LTD [KR]) 5 February 2009 (2009-02-05) | 1,3,4,6 | |
| A | * claims 1,15; figures 4,5 * | 2,5 | |
| X | PENG YIN ET AL: "Localized Weighted Prediction for Video Coding" CONFERENCE PROCEEDINGS / IEEE INTERNATIONAL SYMPOSIUM ON CIRCUITS AND SYSTEMS (ISCAS) : MAY 23 - 26, 2005, INTERNATIONAL CONFERENCE CENTER, KOBE, JAPAN, IEEE SERVICE CENTER, PISCATAWAY, NJ LNKD- DOI:10.1109/ISCAS.2005.1465598, 23 May 2005 (2005-05-23), pages 4365-4368, XP010816640 ISBN: 978-0-7803-8834-5 | 1,2,4,5 | |
| A | * page 4365, right-hand column; figure 1 * | 3,6 | TECHNICAL FIELDS SEARCHED (IPC) H04N |
| X | EP 1 936 994 A2 (TANDBERG TELEVISION ASA [NO]) 25 June 2008 (2008-06-25) | 1,2,4,5 | |
| A | * paragraphs [0016], [0017], [0034]; figure 4 * | 3,6 | |

-/--

~~The present search report has been drawn up for all claims~~

| Place of search | Date of completion of the search | Examiner |
|---|---|---|
| Munich | 1 June 2010 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 15 9475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEBING LIU ET AL: "Linear Transform Based Motion Compensated Prediction for Luminance Intensity Changes" CONFERENCE PROCEEDINGS / IEEE INTERNATIONAL SYMPOSIUM ON CIRCUITS AND SYSTEMS (ISCAS) : MAY 23 - 26, 2005, INTERNATIONAL CONFERENCE CENTER, KOBE, JAPAN, IEEE SERVICE CENTER, PISCATAWAY, NJ LNKD- DOI:10.1109/ISCAS.2005.1464585, 23 May 2005 (2005-05-23), pages 304-307, XP010815538 ISBN: 978-0-7803-8834-5 * abstract * | 1,2,4,5 | |
| X A | WO 2007/094792 A1 (THOMSON LICENSING [FR]; YIN PENG [US]; BOYCE JILL MACDONALD [US]; TOUR) 23 August 2007 (2007-08-23) * page 2, line 30 - page 3, line 8; figure 2 * | 1,2,4,5 3,6 | |
| | | | TECHNICAL FIELDS SEARCHED (IPC) |

~~The present search report has been drawn up for all claims~~

| Place of search | Date of completion of the search | Examiner |
|---|---|---|
| Munich | 1 June 2010 | Oelbaum, Tobias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**Application Number**

EP 10 15 9475

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

1. claims: 1-6

   Video encoder/decoder wherein motion vectors and weighted
   prediction parameters are decoupled
   ---

2. claims: 7-12

   Video encoder/decoder wherein weighting parameters are
   differentially encoded
   ---

3. claims: 13-15

   Video encoder/decoder wherein weighting parameters are
   calculated using a plurality of different calculation
   methods and are encoded using context-adaptive binary
   arithmetic coding
   ---

## ANNEX TO THE EUROPEAN SEARCH REPORT
## ON EUROPEAN PATENT APPLICATION NO.

EP 10 15 9475

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2010

| Patent document cited in search report | | Publication date | Patent family member(s) | | Publication date |
|---|---|---|---|---|---|
| WO 2006033953 | A1 | 30-03-2006 | CN | 101023673 A | 22-08-2007 |
| | | | EP | 1790168 A1 | 30-05-2007 |
| | | | JP | 2008514122 T | 01-05-2008 |
| | | | JP | 2008312266 A | 25-12-2008 |
| | | | KR | 20070051334 A | 17-05-2007 |
| | | | US | 2008253456 A1 | 16-10-2008 |
| WO 2009017301 | A1 | 05-02-2009 | CN | 101766030 A | 30-06-2010 |
| | | | KR | 20090012926 A | 04-02-2009 |
| | | | US | 2009034854 A1 | 05-02-2009 |
| EP 1936994 | A2 | 25-06-2008 | CN | 101227608 A | 23-07-2008 |
| | | | GB | 2444992 A | 25-06-2008 |
| | | | US | 2008198927 A1 | 21-08-2008 |
| WO 2007094792 | A1 | 23-08-2007 | CN | 101385346 A | 11-03-2009 |
| | | | EP | 1985122 A1 | 29-10-2008 |
| | | | JP | 2009527186 T | 23-07-2009 |
| | | | US | 2010232506 A1 | 16-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060198440 A1
- WO 2007092215 A2
- US 20090034854 A1
- EP 091170576 A
- EP 09170576 A